# EUROPÄISCHE PATENTSCHRIFT

(11) **EP 2 855 138 B1**
(45) Veröffentlichungstag und Bekanntmachung des Hinweises auf die Patenterteilung: **09.09.2020**
(21) Anmeldenummer: 13732372.1
(22) Anmeldetag: 27.05.2013
(51) Int. Cl.: B30B 15/02, B30B 11/10, B22F 3/03, B29L 31/00

(54) **RUNDTAKTPRESSMASCHINE**
ROTARY INDEXING PRESS
PRESSE À CYCLE ROTATIF

(30) Priorität: 25.05.2012 DE 102012010263
(43) Veröffentlichungstag der Anmeldung: 08.04.2015
(73) Patentinhaber: Bleistahl-Produktions GmbH & Co KG., 58300 Wetter (DE)
(72) Erfinder: SCHMIDT, Holger, 42389 Wuppertal (DE)
(74) Vertreter: Thiel, Christian
(86) Internationale Anmeldenummer: PCT/EP2013/060856
(87) Internationale Veröffentlichungsnummer: WO 2013/175017

(56) Entgegenhaltungen:
- CN-A- 101 692 403
- CN-A- 102 347 128
- CN-B- 102 133 637
- DE-A1- 3 206 981
- FR-A1- 2 661 343
- GB-A- 1 443 510
- US-A- 2 449 008
- US-A- 5 686 118

## Beschreibung

Die Erfindung betrifft eine Rundtaktpressmaschine mit mehreren Bearbeitungsstationen zur gleichzeitigen Ausführung von grundsätzlich nacheinander zu erfolgenden Abläufen, insbesondere zur Herstellung von Grünlingen aus Pulverwerkstoffen. Die Rundtaktpressmaschine kann insbesondere zur Herstellung von Ventilsitzringen und Ventilführungen eingesetzt werden.

Rundtaktmaschinen der genannten Art sind beispielsweise aus der EP 1 064 119 A1 bekannt. Unter einer Rundtaktmaschine wird eine Werkzeugmaschine verstanden, bei auf einem um eine vertikale Schaltachse drehbaren Schaltteller mehrere Bearbeitungsstationen angeordnet sind. Jede Bearbeitungsstation ist mit mindestens einer Spannvorrichtung zum Aufspannen des Werkstücks versehen. Den Umfang des Rundtisches entlang sind mehrere ortsfeste Bearbeitungsstationen zur Bearbeitung der auf den Satelliten getragenen Werkstücke vorgesehen. Zur Mehrfachbearbeitung der Werkstücke wird der Rundtische schrittweise von einer Arbeitsposition zur nächsten weitergedreht, wobei die auf dem Rundtisch angeordneten Werkstücke schrittweise von einer Bearbeitungsstation zur nächsten weiter bewegt werden, wo die Werkstücke jeweils mit einer oder mehreren ortsfesten Bearbeitungseinheit bearbeitet werden.

Aus der CN 102 347 128 A geht eine Rundtaktpressmaschine nach dem Oberbegriffs des Anspruchs 1 hervor.

Im Allgemeinen sind Rundtaktmaschinen bekannt mit vertikal oder horizontal angeordneten Schalttellern bei Montage-, Bearbeitungs- oder Prüfmaschinen, um an mehreren Stationen zeitgleich bei baugleichen Werkstücken parallel

Montagen oder Prüfaufgaben vorzunehmen. Die Taktzeit wird von der Bearbeitungsstation mit der längsten Bearbeitungszeit bestimmt.

Prinzipiell haben die vorbekannten Rundtaktmaschinen den Vorteil, dass in einem einzigen Schaltteller eine Mehrfachbearbeitung der Werkstücke mittels einer Mehrzahl von Bearbeitungseinheiten möglich ist.

Die vorbekannten Rundtaktmaschinen haben jedoch den Nachteil, dass sie für Pressprozesse ungeeignet sind, da die Belastung mit hohen Presskräften die Schalttellerlagerung beschädigt. Bei der Herstellung von Ventilsitzringen und Ventilführungen aus Pulverwerkstoffen werden Presskräfte von mehr als 700 kN benötigt.

Es ist deshalb Aufgabe der Erfindung, eine Rundtaktpressmaschine zu schaffen, die sich zur Herstellung von gepressten, gleichartigen Grünlingen in hoher Qualität eignet und sich gegenüber konventionellen Pressmaschinen, die feststehende Matrizen- und Werkzeugebenenplatten aufweisen, eine höhere Produktionsrate aufweist. Ferner soll die Rundtaktpressmaschine geeignet sein für eine Mehrfachbefüllung und eine Mehrfachverdichtung auch unterschiedlicher Pulver. Dabei soll die Schalttellerlagerung durch den Pressvorgang nicht belastet werden.

Zur Lösung dieser Aufgabe schlägt die Erfindung eine Rundtaktpressmaschine mit den Merkmalen des Anspruchs 1 vor.

Es hat sich überraschend gezeigt, dass die Verwendung einer Rundtaktpressmaschine zur Herstellung von Grünlingen gegenüber herkömmlichen Pressverfahren zu einer nicht unerheblichen Energieeinsparung führt. Zudem erfolgt durch die stationäre Anordnung der Werkzeuge eine Verkürzung der Werkzeugwege, womit eine Rationalisierung des Fertigungsprozesses herbeigeführt wird.

Jede Werkzeugkavität eignet sich zur Herstellung von jeweils einem Grünling. Dabei durchlaufen die zu fertigenden Werkstücke unterschiedliche Werkzeugpositionen, wie das Befüllen, Vorverdichten, erneut Befüllen, Verdichten, Ausstoßen, Abschieben und Reinigen. Um die Schalttellerlagerung nicht zu beschädigen, ist er während des Verdichtens form- und/oder kraftschlüssig mit dem Maschinenkörper verbunden. Somit hinterlässt der Verdichtungsschritt keine Schäden am Schaltteller, da die gesamte auf den Schaltteller wirkende Belastung auf den Maschinenkörper weitergeleitet wird.

Die vorgestellte Erfindung sieht vor, dass die Werkzeugkavitäten im Schaltteller als Wechselmatrizen ausgebildet sind. Dies erlaubt eine einfache und schnelle Umstellung des Produktionsprozesses auf andere Artikel.

Eine bevorzugte Ausführungsform der Rundtaktpressmaschine sieht vor, dass der Schaltteller jeweils mehrere Matrizen je Schaltposition mit zugehörigen Werkzeugen zum Befüllen, Verdichten, Ausstoßen und Abnehmen bzw. Abschieben aufweist. Dies ermöglicht die Herstellung einer Mehrzahl von Grünlingen. Da die Grünlinge bearbeitungsstationsgebundene Taktzeiten aufweisen, bietet sich der Einsatz mehrerer Matrizen und zugehöriger Werkzeuge an, um zeitsparend zu fertigen.

Die Rundtaktpressmaschine zeichnet sich unter anderem dadurch aus, dass die Maschine über den Schaltteller wenigstens Einrichtungen zum Befüllen, zum Verdichten, zum Ausstoßen, zum Abschieben oder Abnehmen der Verdichtungsprodukte aufweist. Eine Werkzeugkavität kann mehrfach mit unterschiedlichen oder gleichen Pulvern befüllt und mehrfach verdichtet werden. Das Befüllen kann saugend, fallend oder dosiert erfolgen. Die separate Herstellung von Infiltrierteilen kann entfallen. Dies ermöglicht die komplette Herstellung eines Grünlings an einer einzigen Maschine. Da sämtliche benötigte Fertigungsschritte an der Rundtaktmaschine ausgeführt werden können, ist der Einsatz von zusätzlichen Maschinen nicht notwendig. Dies erspart die Anschaffung von zusätzlichen Maschinen und reduziert damit die Kosten.

Die Rundtaktpressmaschine ist derart gestaltet, dass an der Unterseite des Schalttellers Unterwerkzeuge auf Bewegungsebenen angeordnet sind, die an den Bearbeitungsstationen durch Kraft-Wege-Einrichtungen bewegt werden. Die Kraft-Wege-Einrichtungen werden CNC-gesteuert und können hydraulisch, elektromechanisch, elektrohydrostatisch oder einer Kombination dieser Möglichkeiten eingesetzt werden. Dies ermöglicht einen präzisen Einsatz der Unterwerkzeuge in Kombination und Abstimmung mit den Oberwerkzeugen. Das Verdichten kann auf Höhe oder Dichte (Weg oder Kraft) erfolgen, von unten, von oben, durch zweiseitiges oder proportionales Verdichten, womit auf die unterschiedlichen Anforderungen der Verdichtungsprodukte eingegangen werden kann.

Die Rundtaktpressmaschine weist zwei oder mehr Unterstempel und zwei oder mehr Oberstempel auf, die separat gesteuert werden können Dies ermöglicht, dass sie unabhängig voneinander bewegt werden können.

Zudem zeichnet sich der Schaltteller durch eine Arretierung der Bewegungsebenen für die Unterwerkzeuge in der Ruheposition während des Schaltens des Schalttellers aus. Dies verhindert, dass sich die Position der Unterwerkzeuge während des Schaltvorgangs verändert und wird benötigt, dass die Kraft- Wege- Einrichtung der folgenden Station eingreifen kann.

Ferner sieht die Erfindung vor, dass die Bewegungen der Ober- und Unterstempel der Verdichtungswerkzeuge frei, ohne mechanische Festanschläge, programmierbar sind. Dies erhöht die Variabilität und Einsatzbreite der erfindungsgemäßen Rundtaktpressmaschine, insbesondere auch bei den Füllhöhen der Kavitäten.

Eine besonders bevorzugte Ausführungsform der Rundtaktpressmaschine besteht darin, dass sie Fülleinrichtungen zur Mehrfachbefüllung einer Kavität aufweist. Damit lassen sich mehrschichtige Grünlinge herstellen. Dies kann besonders vorteilhaft sein, wenn der später gesinterte Grünling an unterschiedlichen Positionen voneinander abweichende Eigenschaften aufweisen muss. Weist der Grünling Stellen auf, die keine hohen Anforderungen erfüllen müssen, lassen sich hier günstigere Werkstoffe verwenden.

Zudem sieht die Rundtaktpressmaschine vor, dass sie Werkzeuge für eine Vorverdichtung und wenigstens eine Nachverdichtung aufweist. Die Vorverdichtung würde im Falle der vorgenannten Mehrfachbefüllung angewandt werden. Damit lassen sich die unterschiedlichen Materialschichten durch unterschiedlich geformte Oberstempel entsprechend ihren Anforderungen vorverdichten. Sobald die letzte Befüllung erfolgt ist, erfolgt die abschließende Nachverdichtung.

In einer vorteiligen Ausführungsform der Rundtaktpressmaschine, sind die Kraft-Wege-Einrichtungen für die Ober- und Unterstempel des Verdichtungswerkzeugs mit einer Messeinrichtung ausgestattet. Dies ermöglicht die Feststellung und Kompensation der Stempelstauchung und Auffederung beim Verdichtungs- und Entlastungsvorgang. Hierdurch wird eine hohe Maßhaltigkeit der Grünteile erreicht.

Eine weitere positive Ausgestaltung der Rundtaktpressmaschine liegt in der Verwendung einer Schnellspanneinrichtung für den Schaltteller zum Rüsten des Schalttellers und der damit verbundenen Werkzeuge außerhalb der Maschine. Hierdurch wird die Stillstandszeit für einen Rüstvorgang erheblich reduziert angesichts der umfangreicheren Einrichtearbeit gegenüber einer konventionellen Pulverpresse.

Die erfindungsgemäße Rundtaktpressmaschine erlaubt ein Verfahren zur Herstellung von Grünlingen aus Pulverwerkstoffen in einer Rundtaktpressmaschine, bei dem Kavitäten mit dem Pulverwerkstoff befüllt werden, die Pulverwerkstoffe verdichtet werden und die aus dem Pulverwerkstoff erhaltenen Grünlinge ausgestoßen werden. Die einzelnen Schritte werden unter Verwendung eines Schalttellers durchgeführt, der eine Vielzahl von Kavitäten aufweist, die als Matrizen dienen, und bei dem die Schritte des Befüllens, Verdichtens und Ausstoßens gleichzeitig an verschiedenen Bearbeitungsstationen erfolgen, wobei der Schaltteller während des Verdichtens form- und/oder kraftschlüssig mit dem Maschinenkörper verbunden wird. Die Kombination der vorgenannten Merkmale ermöglicht es erstmals, Grünlinge mit einer Rundtaktpressmaschine herzustellen. Die Problematik des bislang nicht einsetzbaren Schalttellers wird durch den Form- und/oder Kraftschluss mit dem Maschinenkörper gelöst.

Eine Variante des Verfahrens besteht darin, dass das Gesamtverfahren in einer Vielzahl von Bearbeitungsstationen parallel durchgeführt wird, wobei jede Bearbeitungsstation mehrere Kavitäten für den gleichen Bearbeitungsschritt aufweist. Die erhöhte Anzahl der Kavitäten an den gleichzeitig betriebenen Bearbeitungsstationen lässt eine bedeutend höhere Produktionsrate, als bislang üblich, zu.

Eine bevorzugte Variante des Verfahrens besteht darin, dass die einzelnen Kavitäten mehrfach mit Pulverwerkstoff befüllt werden, der anschließend verdichtet wird. Damit lassen sich die geforderten Eigenschaften der gesinterten Produkte gezielt erreichen. Beispielsweise können Werkstoffe mit unterschiedlichen Wärmeleit- oder Verschleißfähigkeiten eingesetzt werden. Dies kann je nach Einsatzgebiet des gesinterten Produkts notwendig sein. Ferner lassen sich an weniger beanspruchten Bereichen günstigere Werkstoffe einsetzen, als an den kritischen Bereichen des gesinterten Produkts, etwa eines Ventilsitzsrings oder einer Ventilführung.

Eine bevorzugte Ausführung des Verfahrens besteht darin, dass in ein und derselben Kavität nach einem ersten Befüllungs- und Verdichtungsschritt erneut befüllt und verdichtet wird. Damit lassen sich besondere Geometrien der einzelnen Pulverwerkstoffschichten realisieren, die entsprechend den Anforderungen an das gesinterte Produkt ausgeführt werden können. Auch hier lassen sich Werkstoffe mit unterschiedlichen Eigenschaften einsetzen, die den Ansprüchen des gesinterten Produkts entsprechen sollten.

Eine besonders bevorzugte Ausführungsform des Verfahrens sieht vor, dass mehrere Grünlinge gleichzeitig gefertigt werden. Eine gleichzeitige Herstellung mehrerer Grünlinge erhöht die Produktionsrate und optimiert damit die Amortisationsdauer der Rundtaktmaschine. Selbsterklärend hat eine erhöhte Produktion besonders vorteilhafte Auswirkungen auf die Rentabilität des Produkts.

Ein wesentlicher Vorteil des Verfahrens besteht darin, dass an mehreren Bearbeitungsstationen gleichzeitig befüllt, verdichtet und ausgestoßen wird. Damit wird nach Ablauf des ersten Zyklus sichergestellt, dass bei jeder Schaltung des Schalttellers an jeder Bearbeitungsstation mindestens ein Grünling fertiggestellt wird. Dies ermöglicht eine hohe Produktionsrate.

Die Erfindung eignet sich insbesondere für Ventilführungs- und Ventilsitzringgrünlinge, die mit einer Rundtaktpressmaschine oder einem Verfahren nach dem vorhergehenden Anspruch gefertigt werden. Ventilsitzringe werden heutzutage pulvermetallurgisch- und zweischichtig hergestellt. Durch eine weitere Befüllung und Verdichtung, z.B. mit Infiltrierpulver, können die Herstellung eines Infiltriergrünlings und die Handhabung des Zusammenbringens beider Komponenten entfallen. Eine hohe Produktionsrate ist gewünscht. Durch die vorhergehenden beschriebenen Maßnahmen wird dies ermöglicht.

Ausführungbeispiele der Erfindung werden im Folgenden anhand der Zeichnung näher erläutert. Es zeigen:
- Figur 1: Prinzipskizze des Schalttellers mit folgenden Merkmalen: Zweistufige Befüllung, zweistufige Verdichtung mit Einfach-Werkzeug-Kavität,
- Figur 2: Prinzipskizze eines Schalttellers mit folgenden Merkmalen: Einstufige Befüllung, einstufige Verdichtung mit Mehrfach-Werkzeug-Kavität, Zweifachnutzung,
- Figur 3: Prinzipskizze eines Schalttellers mit folgenden Merkmalen: Einstufige Befüllung, einstufige Verdichtung mit Zweifach-Werkzeug-Kavität, Vierfachnutzung,
- Figur 4: Prinzipskizze eines Schalttellers mit folgenden Merkmalen. Zweistufige Befüllung, zweistufige Verdichtung mit Zweifach-Werkzeug-Kavität, Zweifachnutzung,
- Figur 5: Prinzipskizze eines Schalttellers mit folgenden Merkmalen: Dreistufige Befüllung, dreistufige Verdichtung mit Zweifach-Werkzeug-Kavität, Zweifachnutzung.

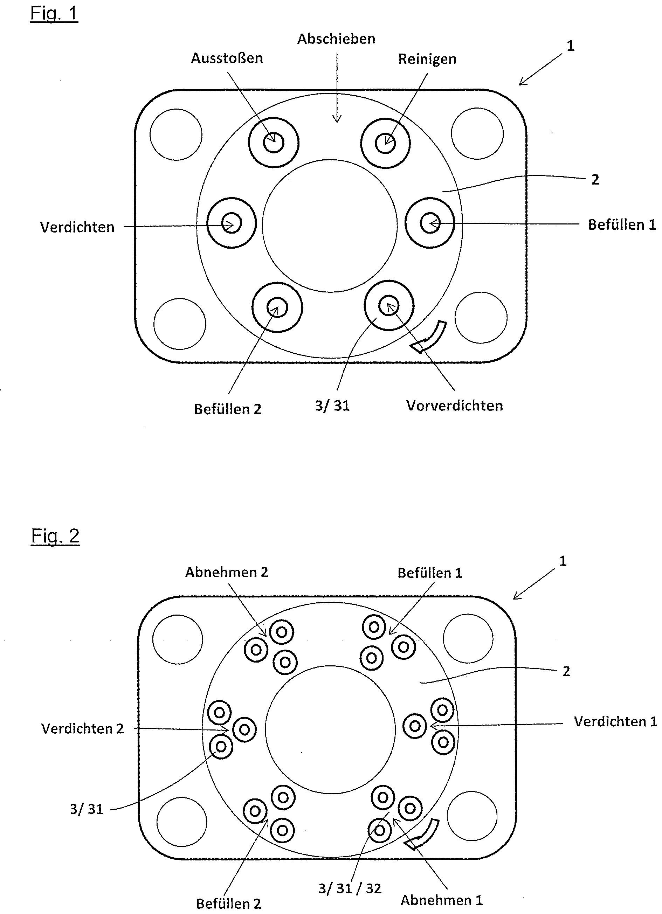

In den Figuren 1 bis 5 erkennt man jeweils eine Rundtaktpressmaschine 1 auf der ein Schaltteller 2 angeordnet ist, der eine Vielzahl von Bearbeitungsstationen 3 bzw. Matrizen und Werkzeugstempel 31 aufweist, von denen aus Gründen der Übersichtlichkeit nur ein Element mit Bezugszeichen markiert ist. In den vorliegenden Figuren bewegt sich der Schaltteller 2 der Rundtaktmaschine 1 immer im Uhrzeigersinn. Die Figuren 2 bis 5 weisen zusätzlich mehrfache Werkzeugkavitäten 32 auf.

In Figur 1 erkennt man eine zweistufige Befüllung mit zweistufiger Verdichtung bei einer Einfach-Werkzeug-Kavität. Das mehrstufige Befüllen lässt den Einsatz von unterschiedlichen Werkstoffen zu. Dies wirkt sich besonders vorteilhaft auf die Eigenschaft des Werkstücks aus. Nach dem letzten Verdichtungsschritt wird das Werkstück ausgestoßen und abgeschoben. Es folgt eine Reinigung der Bearbeitungsstation 3 bzw. der Matrizen und Werkzeugstempel 31. Bei jedem Schalttakt des Schalttellers 2 wird ein Grünling hergestellt.

In Figur 2 erkennt man eine jeweils einstufige Befüllung sowie eine einstufige Verdichtung mit Mehrfach-Werkzeug-Kavität 32, in diesem Fall einer dreifachen Werkzeug-Kavität 32. Der Schaltteller 2 der Rundtaktpressmaschine 1 erfährt in diesem Beispiel eine Zweifachnutzung. Dies bedeutet, dass bei jedem Schalttakt des Schalttellers sechs Grünlinge hergestellt werden.

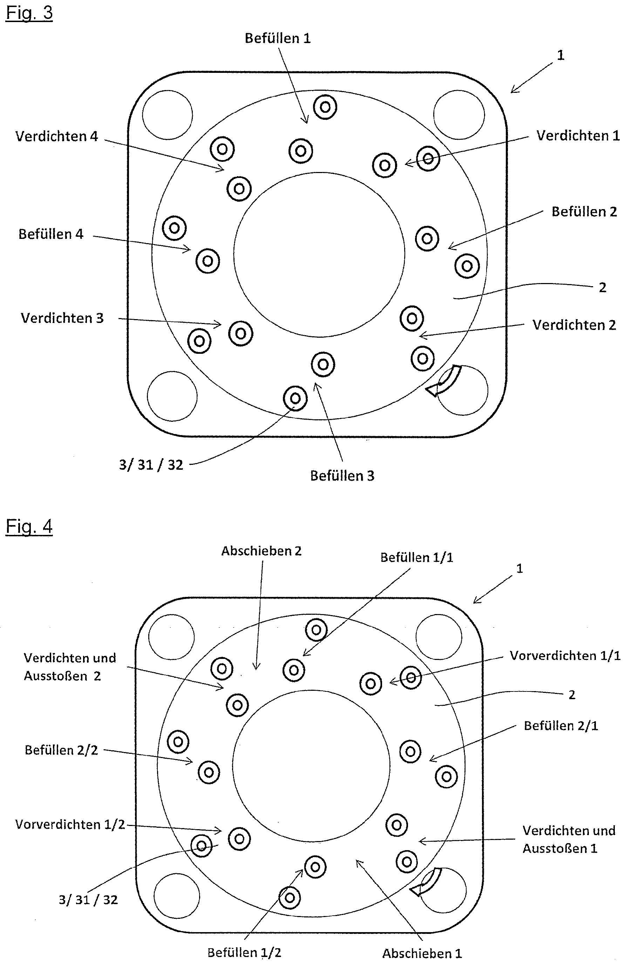

Figur 3 zeigt eine einstufige Befüllung mit einstufiger Verdichtung bei zweifacher Werkzeug-Kavität 32. In diesem Fall handelt es sich jedoch um eine Vierfachnutzung. Dies bedeutet, dass bei jedem Schalttakt des Schalttellers 2 der Rundtaktpressmaschine 1 insgesamt acht Grünlinge hergestellt werden.

Figur 4 beschreibt eine zweistufige Befüllung mit zweistufiger Verdichtung und zweifacher Werkzeug-Kavität 32. Es folgt eine Zweifachnutzung. Der Prozess beginnt mit dem Befüllen der ersten Bearbeitungsstation 3 für das erste Werkstück. Es folgt ein Vorverdichten des ersten Werkstücks, sowie eine zweite Befüllung und das abschließende Verdichten sowie Ausstoßen des ersten Werkstücks. Nachdem es abgeschoben wurde, beginnt die Befüllung der zweiten Bearbeitungsstation für den zweiten Grünling. Auch hier erfolgt eine erste Befüllung, ein Vorverdichten sowie eine zweite Befüllung, gefolgt von dem abschließenden Verdichten und dem Ausstoßen mit abschließendem Abschieben des fertigen Grünlings. Während jedem Schalttakt des Schalttellers werden insgesamt vier Grünlinge erzeugt.

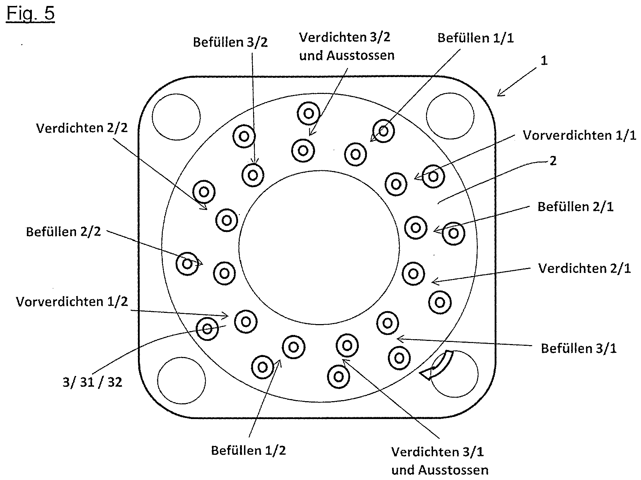

Figur 5 entspricht dem Prinzip der Figur 4, wobei hierbei eine dreistufige Befüllung sowie eine dreistufige Verdichtung vorliegt. Aufgrund der zweifachen Werkzeug-Kavität und der Zweifachnutzung werden bei jedem Schalttakt des Schalttellers 2 der Rundtaktpressmaschine 1 insgesamt vier Grünlinge hergestellt.

Von einer herkömmlichen Rundläuferpresse unterscheidet sich eine erfindungsgemäße Schalttellerpressmaschine im Wesentlichen dadurch, dass sie mehr als einen Oberstempel und mehr als einen Unterstempel aufweist, die jeweils separat voneinander gesteuert und unabhängig voneinander bewegt werden können. Dabei können hohe Presskräfte eingesetzt werden, weil der Schalteller während des Pressvorgangs am Maschinenarm abgestützt ist. Die Variabilität erlaubt große Füllhöhen, die ganz auf das jeweilige Produkt, beispielsweise Ventilführungen, abgestimmt sind. Mehrschichtbefüllungen sind ohne weiteres möglich, wobei individuell jede Füllschicht separat vorgeformt und vor- oder fertig verdichtet werden kann. Dabei können separate Werkzeuge, die auf die jeweilige Form abgestimmt sind, und individuelle Presskräfte zum Einsatz kommen. Auf dem Schaltteller angeordnete Werkzeuge können einfach oder mehrfach am Umfang genutzt werden.

## Patentansprüche

1. Rundtaktpressmaschine mit mehreren Bearbeitungsstationen (3) zur gleichzeitigen Ausführung von grundsätzlich nacheinander erfolgenden Abläufen, insbesondere zur Herstellung von Grünlingen aus Pulverwerkstoffen, wobei die Rundtaktpressmaschine (1) einen Schaltteller (2) aufweist, der mit einer Mehrzahl von Werkzeugkavitäten (31) ausgestattet ist, die einer Mehrzahl von Werkzeugpositionen zugeordnet sind, wobei über dem Schaltteller (2) Werkzeugpositionen wenigstens für das Befüllen, Verdichten und Ausstoßen von Werkstücken vorgesehen sind, wobei jeder Werkzeugposition mehr als eine Kavität zugeordnet ist, dergestalt, dass das Gesamtverfahren in einer Vielzahl von Bearbeitungsstationen (3) parallel durchgeführt wird, wobei jede Bearbeitungsstation (3) mehrere Kavitäten für den gleichen Bearbeitungsschritt aufweist **dadurch gekennzeichnet, dass** der Schaltteller (2) während des Verdichtens form-und/oder kraftschlüssig mit einem Maschinenkörper verbunden ist und an der Unterseite des Schalttellers (2) Unterwerkzeuge angeordnet sind, die an den jeweiligen Bearbeitungsstationen (3) durch Kraft-Wege-Einrichtungen bewegt werden.

2. Rundtaktpressmaschine nach Anspruch 1, **dadurch gekennzeichnet, dass** die Werkzeugkavitäten (31) als Matrizen ausgebildet sind.

3. Rundtaktpressmaschine nach Anspruch 2, **dadurch gekennzeichnet, dass** der Schalttellers (2) jeweils mehrere Matrizen und zugehörige Werkzeuge zum Befüllen, Verdichten und Ausstoßen aufweist.

4. Rundtaktpressmaschine nach Anspruch 1, **gekennzeichnet durch** eine Arretierung für die Unterwerkzeuge in der Ruheposition während des Schaltens des Schalttellers (2).

5. Rundtaktpressmaschine nach Anspruch 4, **dadurch gekennzeichnet, dass** die Bewegungen der Ober- und Unterwerkzeuge der Verdichtungswerkzeuge an jeder Position frei programmierbar sind.

6. Rundtaktpressmaschine nach einem der vorstehenden Ansprüche, **dadurch gekennzeichnet, dass** sie Fülleinrichtungen zur Mehrfachbefüllung einer Kavität aufweist.

7. Rundtaktpressmaschine nach Anspruch 6, **dadurch gekennzeichnet, dass** sie Werkzeuge für eine Vorverdichtung und wenigstens eine Nachverdichtung aufweist.

8. Rundtaktpressmaschine nach einem der vorstehenden Ansprüche, **gekennzeichnet durch** Kraft-Wege-Messeinrichtungen für die Ober- und Unterstempel des Verdichtungswerkzeugs zur Kompensation der Stempelstauchung und Auffederung beim Verdichtungs- und Entlastungsvorgang.

9. Rundtaktpressmaschine nach einem der vorstehenden Ansprüche, **gekennzeichnet durch** eine Schnellspanneinrichtung für den Schaltteller zum Rüsten des Schalttellers und der damit verbundenen Werkzeuge außerhalb der Maschine.

## Claims

1. Rotary indexing press comprising a plurality of processing stations (3) for simultaneously performing sequences which essentially take place one after the other, in particular for producing green bodies from powdered materials, wherein the rotary indexing press (1) is provided with an indexing plate (2) that is equipped with a plurality of tool cavities (31) that are assigned to a plurality of tool positions, wherein the tool positions are provided over the indexing plate (2) at least for filling, compacting and ejecting workpieces, wherein more than one cavity is assigned to each tool position such that the overall method is carried out in a large number of processing stations (3) in parallel, wherein each processing station (3) comprises a plurality of cavities for the same processing step, **characterised in that** the indexing plate (2) is connected to a press body in a form-fitting and/or force-fitting manner during the compaction and lower dies are arranged on the underside of the indexing plate (2), which lower dies are moved to the respective processing stations (3) by means of force-distance devices.

2. Rotary indexing press according to claim 1, **characterised in that** the tool cavities (31) are designed as dies.

3. Rotary indexing press according to claim 2, **characterised in that** the indexing plates (2) each comprise a plurality of dies and associated tools for filling, compacting and ejecting.

4. Rotary indexing press according to claim 1, **characterised by** locking the lower dies in the idle position while switching the indexing plate (2).

5. Rotary indexing press according to claim 4, **characterised in that** the movements of the upper and lower dies of the compaction tools can be freely programmed in each position.

6. Rotary indexing press according to any of the preceding claims, **characterized in that** it comprises filling devices for the multiple filling of a cavity.

7. Rotary indexing press according to claim 6, **characterised in that** it comprises tools for pre-compaction and at least one final compaction process.

8. Rotary indexing press according to any of the preceding claims, **characterised by** force-distance measuring devices for the upper punch and lower punch of the compaction tool for compensating for the punch deflection and the spring-back during the compaction and pressure-relief processes.

9. Rotary indexing press according to any of the preceding claims, **characterised by** a quick-action clamping device for the indexing plate for mounting the indexing plate and the connected tools outside the press.

## Revendications

1. Presse à cycle rotatif avec plusieurs postes d'usinage (3) servant à exécuter simultanément des cycles effectués de base les uns après les autres, en particulier servant à fabriquer des ébauches de compact à partir de matériaux pulvérulents, dans laquelle la presse à cycle rotatif (1) présente un plateau de commutation (2), qui est équipé d'une multitude de cavités d'outil (31), qui sont associées à une multitude de positions d'outil, dans laquelle des positions d'outil au moins pour le remplissage, le compactage et l'expulsion de pièces sont prévues au-dessus du plateau de commutation (2), dans laquelle plus d'une cavité est associée à chaque position d'outil de telle manière que l'ensemble du procédé est mis en oeuvre en parallèle dans une pluralité de postes d'usinage (3), dans laquelle chaque poste d'usinage (3) présente plusieurs cavités pour la même étape d'usinage, **caractérisée en ce que** le plateau de commutation (2) est relié au cours du compactage par complémentarité de forme et/ou à force à un corps de machine et des outils inférieurs sont disposés au niveau du côté inférieur du plateau de commutation (2), qui sont déplacés par des systèmes de force-déplacement au niveau des postes d'usinage (3) respectifs.

2. Presse à cycle rotatif selon la revendication 1, **caractérisée en ce que** les cavités d'outil (31) sont réalisées en tant que matrices.

3. Presse à cycle rotatif selon la revendication 2, **caractérisée en ce que** le plateau de commutation (2) présente respectivement plusieurs matrices et des outils associés de remplissage, de compactage et d'expulsion.

4. Presse à cycle rotatif selon la revendication 1, **caractérisée par** un blocage pour les outils inférieurs dans la position de repos au cours de la commutation du plateau de commutation (2).

5. Presse à cycle rotatif selon la revendication 4, **caractérisée en ce que** les mouvements des outils supérieurs et inférieurs des outils de compactage peuvent être programmés librement au niveau de chaque position.

6. Presse à cycle rotatif selon l'une quelconque des revendications précédentes, **caractérisée en ce qu'**elle présente des dispositifs de remplissage servant au remplissage à plusieurs reprises d'une cavité.

7. Presse à cycle rotatif selon la revendication 6, **caractérisée en ce qu'**elle présente des outils pour un compactage préalable et au moins un compactage ultérieur.

8. Presse à cycle rotatif selon l'une quelconque des revendications précédentes, **caractérisée par** des dispositifs de mesure de force-déplacement pour les poinçons supérieurs et inférieurs de l'outil de compactage servant à la compensation de l'enfoncement de poinçon et de l'effet ressort lors de l'opération de compactage et de décharge.

9. Presse à cycle rotatif selon l'une quelconque des revendications précédentes, **caractérisée par** un dispositif de serrage rapide pour le plateau de commutation servant à équiper le plateau de commutation et les outils reliés à celui-ci à l'extérieur de la machine.
